# EUROPÄISCHE PATENTSCHRIFT

(11) **EP 0 768 155 B1**
(45) Veröffentlichungstag und Bekanntmachung des Hinweises auf die Patenterteilung: **11.04.2001**
(21) Anmeldenummer: 96115224.6
(22) Anmeldetag: 23.09.1996
(51) Int. Cl.: B29B 9/00, C08J 3/12, C08F 6/10

(54) **Verfahren zur Herstellung von thermoplastischem Polymergranulat aus Polymerlösungen**
Process for making thermoplastic granules from polymer solutions
Procédé de fabrication de granulés de matière thermoplastique à partir de solutions de polymères

(30) Priorität: 05.10.1995 DE 19537113
(43) Veröffentlichungstag der Anmeldung: 16.04.1997
(73) Patentinhaber: BAYER AG, 51368 Leverkusen (DE)
(72) Erfinder: Wulff, Claus, Dr., 47800 Krefeld (DE); Zaby, Gottfried, Dr., 51375 Leverkusen (DE); Casper, Clemens, Dr., 47809 Krefeld (DE); Kohlgrüber, Klemens, Dr., 51515 Kürten (DE); Bamberger, Thomas, 47051 Duisburg (DE); Obermann, Hugo, Dr., 41540 Dormagen (DE)

(56) Entgegenhaltungen:
- EP-A- 0 027 700
- EP-A- 0 102 122
- EP-A- 0 267 531
- DE-A- 1 404 237
- DE-A- 1 404 984
- GB-A- 1 347 294
- US-A- 2 992 679
- US-A- 4 198 265
- US-A- 4 808 262

## Beschreibung

Die Erfindung betrifft ein Verfahren zur Herstellung von Polymergranulat aus Polymerlösungen, bei dem organische Lösungsmittel der Polymerlösung in einem Wärmetauscher, gegebenenfalls mit Wasserdampfeinmischung, oder einem Verweilrohr mit Wasserdampfeinmischung verdampft und das pastöse Gemisch von aufkonzentrierter Lösung, Lösungsmitteldampf und gegebenenfalls kondensiertem Wasserdampf in einem mit rotierenden Einbauten zum Abreinigen der Wände versehenen Abscheider getrennt wird. In dem Abscheider wird die vorkonzentrierte Polymerlösung durch Wärmezufuhr über die Beheizung der Abscheiderwände oder der rotierenden Einbauten und durch die Scherenergie der rotierenden Einbauten weiter aufkonzentriert.

Die Restentgasung des Lösungsmittels erfolgt vor der Granulierung z.B. im Austragsextruder des mit rotierenden Einbauten versehenen Abscheiders durch eine oder mehrere Entgasungszonen gegebenenfalls durch zusätzliches Einmischen von Schleppmitteln wie z.B. Inertgase oder Wasserdampf. Bei Verwendung einer Schmelzepumpe als Austragsgerät statt des Extruders kann die Entgasung in. bekannter Weise über andere geeignete Geräte wie z.B. einen Strangverdampfer erfolgen.

Nach den bisher bekannten Verfahren, wie z.B. den in dem US-Patent 3 508 339 beschriebenen Verfahren, erfolgt die Isolierung z.B. von Polycarbonat aus Polycarbonat-Lösungen über eine pulver- oder agglomeratförmige Feststoffphase mit teilweise sehr geringer Schüttdichte. Pulver mit höherer Schüttdichte erhält man bei der Isolierung nach bekannten Verfahren durch die Kristallisation. Kristalline bzw. teilkristalline Polycarbonatpartikel werden beispielsweise nach dem in der deutschen Offenlegungsschrift DE 4 022 232 oder in der deutschen Offenlegungsschrift DE 4 134 483 beschriebenen-Verfahren durch Verdampfung des Lösemittels in einer Vorrichtung zur Durchmischung unter fortwährender oder schubweiser Ausschleusung erhalten, indem die Polycarbonatlösung auf vorgelegtes teilkristallines Polycarbonat aufgegeben und das Lösungsmittel verdampft wird. Die in den Schriften beschriebenen Vorrichtungen sind jedoch nicht geeignet, das eingedampfte Polycarbonat aufzuschmelzen und in der Schmelze zu entgasen.

Die aus den genannten Verfahren erhaltenen Pulver oder Agglomerate werden als Feststoffe getrocknet, anschließend in einem Extruder aufgeschmolzen, durch Düsen zu Strängen verpreßt und die Stränge granuliert. Diese Verfahren sind durch die Vielstufigkeit des Prozesses wirtschaftlich nachteilig. Außerdem enthalten die so gewonnenen Polymere noch unerwünschte Lösungsmittelreste und weisen schlechte Farbeigenschaften auf.

Nach anderen Isolierverfahren werden die durch mehrstufige Eindampfung erhaltenen konzentrierten Lösungen, z.B. von Polycarbonat, in mit Entgasungsdomen versehenen Extrudern weiter aufkonzentriert, verbunden mit einer Entgasung der Schmelze, gegebenenfalls auch unter Zugabe eines hochsiedenden Lösungsmittels. Ein solches Verfahren ist in der Deutschen Auslegungsschrift DE 1 209 741 beschrieben.

Diese Verfahren haben jedoch den Nachteil, daß die zugegebenen hochsiedenden Lösungsmittel in der Entgasungszone des Extruders nur bei sehr hoher Temperatur bzw. bei sehr niedrigem Partialdruck entfernt werden können. Niedrige Partialdrücke werden durch Evakuieren oder technisch bevorzugt durch Einmischung von Inertgas oder Wasserdampf in die Polymerschmelze erreicht. Trotz des großen technischen Aufwandes bleiben hierbei dennoch unerwünschte Spuren der hochsiedenden Lösungsmitteln in den Polymeren zurück.

Werden anstelle hochsiedender Lösungsmittel niedrigsiedende Lösungsmittel verwendet, wie z.B. das bei der Herstellung von Polycarbonat nach dem Phasengrenzflächen-Verfahren bevorzugt eingesetzte Lösungsmittel Dichlormethan, ist die Entgasung wegen des niedrigen Siedepunkts dieses Lösungsmittels erleichtert. Dieses Verfahren hat jedoch den Nachteil, daß die Vorkonzentration unter Normaldruck wegen der dann beginnenden Gelatbildung und Kristallisation der hochkonzentrierten Polymerlösung, z.B. einer Polycarbonatlösung, nur bis zu einer Polycarbonat-Konzentration von ca. 30 Gew-% gelingt. Solche Lösungen werden dann in Extruder eingepumpt, die mit Entgasungsstutzen versehen sind. Dabei ist zur Verhinderung des vorzeitigen Verdampfens des Lösungsmittels vor dem ersten Entgasungsstutzen eine Druckhaltung in den Extruder eingebaut. Außerdem wird ein Druckgradient angelegt, um das schlagartige Verdampfen des Lösungsmittels, das zur Bildung eines hohen Staudrucks im Brüdenraum führt, zu verhindern. Beim Auftreten eines hohen Staudrucks werden Tröpfchen der Polymerlösungen und bereits eingedampfte feste Polymerpartikel mit den Brüden mitgerissen. Der zur Verhinderung eines hohen Staudrucks erhöhte Druck erzwingt eine höhere Bearbeitungstemperatur, die wiederum eine stärkere Zersetzung des Lösungsmittels zur Folge hat, mit z.B. Chlorwasserstoffabspaltung bei dem Lösungsmittel Dichlormethan. Die Zersetzung des Lösungsmittels bedingt in der Folge eine verminderte Qualität der Polymeren.

Aufgabe der Erfindung ist es, ein rationelleres Herstellungsverfahren für Polymergranulate aus Polymerlösung zu finden, das die Nachteile des Standes der Technik nicht aufweist und insbesondere ein kontinuierliches Herstellen von Polymergranulat bei hohem Mengendurchsatz und hoher Qualität ermöglicht.

Es wurde gefunden, daß es gelingt, mit Hilfe modifizierter großvolumiger Mischapparate z.B. ein- oder zweiwelliger Knetmaschinen entsprechend der Schriften EP 460 466 bzw. EP 528 210, die bisher nur zur Feststofftrocknung oder ähnlichen Prozessen eingesetzt wurden, vorkonzentrierte Polymerlösungen zu Polymerschmelzen mit hoher Viskosität bei wirtschaftlichem Durchsatz zu verarbeiten, wenn die Rotoren, der Antriebsteil und insbesondere die an den Rotoren angebrachten Barren verstärkt werden. Außerdem muß unter Umständen das Standard-Drehzahlverhältnis, das z.B. bei zweiwelligen Mischern bei Gegendrall 1:4 beträgt, für den wirtschaftlichen Einsatz wegen des dann integral höheren Energieeintrags geändert werden, z.B. auf bevorzugt 1:1.

Bei der Verwendung eines hochsiedenden Lösungsmittels für das Polymer wird die hohe Viskosität der Mischung wegen der in diesem Fall höheren Glastemperatur nicht erreicht. Es wurde auch gefunden, daß die Verwendung eines großvolumigen Apparates zur Abscheidung der erhitzten Polymerlösungen und der weiteren Aufkonzentrierung bis zur Schmelze zu Polymeren mit geringerem Restlösemittelgehalt führt. Dies wird durch die im Vergleich zu Schneckenmaschinen längere mittlere Verweilzeit der Mischung bewirkt.

Es wurde auch gefunden, daß die Eigenschaften der erfindungsgemäß hergestellten Polymergranulate, z.B. die Farbzahl, charakterisiert durch den Yellowness-Index, die der nach den bekannten Verfahren hergestellten Granulate übertrifft, trotz der längeren mittleren Verweilzeit in den einzusetzenden Apparaten, und daß die thermische Spaltung der Polymeren bei der erfindungsgemäßen Isolierung, quantifiziert durch die Differenz der relativen Lösungsviskosität der Polymere, geringer ist.

Die vorstehend geschilderten Apparate ohne die Anpassungen für den erfindungsgemäßigen Einsatz sind in US 5 407 266 (18. Apr. 1995) und EP 0 460 466 A1, sowie EP 0 528 210 A1 beschrieben.

Die europäische Offenlegungsschrift EP 102 122 A1 beschreibt die Eindampfung von Polymerlösungen, speziell von Ethylencopolymerisaten, mit einem Gehalt von 15 - 20 Gew.-% Polymer, die bei 175 - 230°C in einem Reaktor hergestellt werden. In einer zweistufigen Trockenvorrichtung, bestehend aus einem Abscheider 5 und einem Schneckenextruder, wird die auf 230 bis 290°C erhitzte Lösung vorkonzentriert und das auf 80 - 99 Gew.-% vorkonzentrierte Polymer in einem Schneckenextruder weiter entgast. Hierbei wird ein Restlösemittelgehalt von kleiner 500 ppm angestrebt und gemäß dem Beispiel S. 11, Z. 13 ein Restlösemittelgehalt von 450 ppm erreicht.

Aus der europäischen Offenlegungsschrift EP 267 531 A2 ist noch ein Eindampfverfahren für hochviskose Produkte bekannt geworden. Das Verfahren beinhaltet die Erhitzung einer Polymerlösung z.B. bei 3 bar und 100 °C und die anschließende Trocknung in einem Mischerkneter. Hierbei soll die Lösung bei weitestgehender Trocknung in ein rieselfähiges Pulver zerfallen.

Das Abscheiden von Lösungen, die in einem Strömungsrohr verdampft werden, erfolgt nach dem Stand der Technik in Apparaten ohne Einbauten oder in großvolumigen Apparaten mit Einbauten zum Abreinigen der Wände und Fördern des Trockengutes. Ein typisches Beispiel für solche großvolumigen Apparate mit Einbauten sind Pulvertrockner.

Die in EP 267 531 A 2 beschriebenen Verfahrensweisen führen von verdünnten Polymerlösungen entweder zu hochkonzentrierten Polymeren mit Glastemperaturen unterhalb der Siedepunkte der Lösungsmittel oder zu koagulierten Kautschukpartikeln.

Gegenstand der Erfindung ist ein Verfahren zur Herstellung von Polymergranulat aus Polymerlösungen thermoplastischer Polymere durch Vorkonzentrierung der Polymerlösung mittels Wärmetauschung oder Strippen des Lösungsmittels mit Wasserdampf in einem Verweilrohr oder einem Wärmetauscher zu konzentrierter Polymerlösung bzw. Polymerpaste, weitere Aufkonzentrierung und Trocknung in einer Trockenapparatur, Extrudieren und Granulieren des getrockneten Polymers, wobei die Polymerlösung, insbesondere ein ABS- oder Polycarbonatlösung, bevorzugt eine Lösung von Polycarbonat mit einem Molekulargewicht, charakterisiert durch die Lösungsviskosität ηrel. von 1,15 bis 1,40, vorzugsweise von 1,20 bis 1,35, mit einer Polymer-Konzentration von 3 bis 30 Gew-%, vorzugsweise von 15 bis 25 Gew-% in organischem Lösungsmittel, vorzugsweise in Dichlormethan, in einem oder mehreren Wärmetauschern, deren gesamte Wärmeaustauschfläche 0,02 m² / 100 kg/h Lösungsmittel bis 2 m² /100 kg/h Lösungsmittel beträgt, unter einem Druck von 1 bis 15 bar, vorzugsweise von 1 bis 5 bar gemessen am Ausgang des Wärmetauschers, und bei einer Temperatur im Wärmetauscher von 50°C bis 300°C, vorzugsweise von 150°C bis 250°C erhitzt wird,
oder durch Mischen mit überhitztem Wasserdampf, einer Temperatur von 100 bis 300°C, vorzugsweise von 140 bis 250°C, in einem Lösemittel/ Wasserdampf-Verhältnis von mindestens 10:1, in einem beheizten oder unbeheiztem Verweilrohr mit einem Länge/ Durchmesser-Verhältnis von 100 bis 10 000, vorzugsweise von 1000 bis 2000 erhitzt wird,
oder durch Mischen mit Wasserdampf einer Temperatur von 100 bis 300°C, vorzugsweise von 140°C bis 250°C und einem Druck von 1 bis 100 bar, vorzugsweise von 16 bis 30 bar, in einem Wärmetauscher, dessen Wärmetausch-Fläche 0,02 m² / 100 kg/h Lösungsmittel bis 2 m² / 100 kg/h Lösungsmittel beträgt, erhitzt wird und die so erhitzte Mischung durch Entspannung in einen Zwischenabscheider oder Trockenapparat, der mit rotierenden Einbauten versehen ist, unter Abtrennung der Brüden zu konzentrierter Polymerlösung oder- paste mit einer Konzentration von 25 bis 80 Gew% vorzugsweise von 35 bis 60 Gew%, der konzentrierten Paste bzw. Lösung, bezogen auf das Polymer und gegebenenfalls kondensiertem Wasserdampf, aufkonzentriert und abgeschieden wird, bei dem die aufkonzentrierte Polymerlösung oder Polymerpaste in dem Trockenapparat, der zur mechanischen Abreinigung der Apparatewände und zum Stofftransport mit rotierenden Einbauten versehen ist, durch Beheizung des Gehäusemantels oder durch Beheizung der rotierenden Einbauten oder durch Beheizung von Gehäusemantel und rotierenden Einbauten, sowie durch die sich in dem abgeschiedenen Gut bewegenden Einbauten verursachte Scherung bis zur Schmelze erwärmt und weiter aufkonzentriert bzw. entgast wird, wobei die Temperatur der Apparatewand bzw. der Einbauten von 150 bis 400°C, vorzugsweise von 200 bis 300°C und besonders bevorzugt 240 bis 280°C beträgt, bei dem die Aufkonzentrierung und die Entgasung bei einem Innendruck von 1 mbar bis 5 bar, bevorzugt bei Normaldruck erfolgt, gegebenenfalls auch unter Zugabe von Inertgas oder Wasserdampf, wobei ferner der integrale Energieeintrag als auf den Austragsdurchsatz bezogene Spezifische Knetenergie 0,01 bis 1 kWh pro Kg trockene Polymerschmelze beträgt und die Verweilzeit im Trockner 5 bis 90 Minuten beträgt. Die Verweilzeit beträgt 5-90 Min., vorzugsweise 5-20 Min. Die Einbauten müssen eine ausreichende mechanische Stabilität aufweisen, um die beim Übergang des bei der Entspannung entstehenden Feststoffes vom festen Zustand in die Schmelze auftretenden hohen Scherkräfte der Mischungen aus plastifizierten und erstarrten Polycarbonatschmelzen zu überwinden. die Antriebsleitung der rotierenden Einbauten und deren mechanische Festigkeit muss den beim Prozess auftretenden Scherkräften angepasst werden.

Der integrale Energieeintrag beträgt im erfindungsgemäßen Verfahren als auf den Austragdurchsatz bezogene spezifische Knetenergie von 0,01 bis 1 kWh pro kg trockene Polymerschmelze, bevorzugt von 0,05 bis 0,5 kWh/kg und besonders bevorzugt von 0,1 bis 0,3 kWh/kg trockene Polymerschmelze.

Die Polymerschmelze wird aus dem Trockenapparat bevorzugt mittels Extruder oder Schmelzpumpe ausgetragen.

Die Restentgasung der Schmelze erfolgt, im Falle des Austrags mittels Extruder vorzugsweise durch Einrichtung von Schleppgas- und Entgasungszonen am Austragsextruder, im Falle des Austrags der Schmelze mittels Schmelzepumpe durch Zwischenschaltung einer Entgasungseinrichtung, z.B. eines Strangverdampfers oder durch Nachschaltung eines Extruders mit Entgasungseinrichtungen. Der Prozeß der Aufkonzentrierung oder der der Entgasung mittels Austragsextruders kann mit dem des Einmischens von anderen Stoffen in das Polymer wie z.B. andere Polymere, Farbstoffe, Stabilisatoren, Füllstoffe oder Glasfasern kombiniert werden.

Das Verfahren kann auch mehrstufig betrieben werden. In diesem Fall wird die aufkonzentrierte Polymermischung aus dem Wärmetauscher in einen Abscheider, der vorzugsweise keine rotierenden Einbauten enthält, entspannt und die Gasphase von der flüssigen Phase getrennt. Dieser Abscheider kann bei vermindertem Druck bei atmosphärischem Druck oder vorzugsweise unter erhöhtem Druck betrieben werden. Die in diesem Abscheider abgeschiedene polymerhaltige Mischung wird mittels Schmelzepumpe ausgetragen, in einem weiteren Wärmetauscher unter Druck erhitzt und in einen Trockenapparat, wie vorstehend beschrieben, der mit rotierenden Einbauten versehen ist, entspannt. Die weitere Aufkonzentrierung erfolgt wie bei der einstufigen Abscheidung in diesem Apparat.

Die Restentgasung des Lösungsmittels erfolgt im Austragsextruder des mit rotierenden Einbauten versehenen Abscheiders durch eine oder mehrere Entgasungszonen gegebenenfalls durch zusätzliches Einmischen von Schleppmittel wie z.B. Inertgas oder Wasserdampf in bekannter Weise. Bei Verwendung einer Schmelzepumpe als Austragsgerät statt des Extruders kann die Entgasung in bekannter Weise über andere geeignete Geräte wie z.B. einen Strangverdampfer erfolgen.

Die nach diesem Verfahren erhaltenen Polymergranulate zeichnen sich durch extrem geringe Restlösungsmittelgehalte, durch gute Farbeigenschaften und geringen thermischen Abbau der Polymerkette im Isolierungsprozeß aus.

Lösemittel für die thermoplastischen Polymere im Sinne der Erfindung sind alle organischen Lösungsmittel, die das Polymer wenigstens zu 5 Gew.-% lösen, insbesondere Methylenchlorid, Chlorbenzol, Toluol, Tetrahydrofuran oder 1,3-Dioxolan sowie Mischungen der genannten Lösungsmittel, besonders bevorzugt Dichlormethan.

Die nach Durchpressen der Schmelze durch Düsen erhaltenen Stränge werden abgekühlt und granuliert. Die Granulate werden im Spritzgußverfahren zu Formkörpern verarbeitet. Die Verwendung dieser Polycarbonatkörper erfolgt in üblicher Weise, beispielsweise auf dem Gebiet der Elektrotechnik, der Optik, im Fahrzeugbau und in der Beleuchtungsindustrie.

Geeignete thermoplastische Polymere, die nach dem erfindungsgemäßen Verfahren zu Granulat verarbeitet werden, sind z.B. Polycarbonat, Polyestercarbonat, Polyalkylenterephthalat, EPDM-Polymerisate, Polystyrol sowie Polystyrol-Co- und Pfropfcopolymere z.B. von Polystyrol mit Acrylnitril oder Acrylnitril und Butadien wie insbesondere ABS. Bevorzugte Polymere sind Acrylnitril-, Butadien-, Styrolcopolymere (ABS) und aromatisches Polycarbonat.

Thermoplastische, aromatische Polycarbonate, die besonders bevorzugt im Sinne des erfindungsgemäßen Verfahrens eingesetzt werden, sind aromatische Homopolycarbonate, Copolycarbonate und Mischungen dieser Polycarbonate, die sich insbesondere von folgenden Diphenolen ableiten:

Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -sulfoxide, -sulfone und α,α'-Bis-(hydroxyphenyl)-diisopropylbenzole, sowie deren kernalkylierte und kernhalogenierte Verbindungen.

Geeignete Diphenole sind beispielsweise in den US-Patenten US 3 028 365, US 2 999 835, US 3 062 781, US 3 148 172 und US 4 982 014, in den deutschen Offenlegungsschriften DE 1 570 703 und DE 2 063 050, sowie in der Monographie "H. Schnell, Chemistry and Physics of Polycarbonates, Interscience Publishers, New York, 1964" beschrieben.

Bevorzugte Diphenole sind
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
α,α'-Bis-(4-hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren,
9,9-Bis-(3,5-dimethyl-4-hydroxyphenyl)-fluoren.

Besonders bevorzugte Diphenole sind z.B.:
2,2-Bis-(4-hydroxyphenyl)-propan,
2,2-Bis-(3,5-dimethyl-4-hydroxyphenyl)-propan,
1,1-Bis-(4-hydroxyphenyl)-cyclohexan,
1,1-Bis-(4-hydroxyphenyl)-1-phenyl-ethan,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-4-methylcyclohexan,
9,9-Bis-(3,5-dimethyl-4-hydroxyphenyl)-fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxyphenyl)-1-phenyl-ethan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise bei der Synthese der genannten Polycarbonate mitverwendet sein. Einige der verwendbaren Verbindungen sind beispielsweise:
1,3,5-Tris-(4-hydroxyphenyl)-benzol,
1,3,5-Tris-(4-(4-hydroxyphenylisopropyl)-phenyl)-benzol,
1,1,1-Tris-(4-hydroxyphenyl)-ethan,
2,6-Bis-(2-hydroxy-5'-methyl-benzyl)-4-methylbenzol,
2-(4-Hydroxyphenyl)-2-(2,4-dihydroxyphenyl)-propan,
Hexakis-(4-(4-hydroxyphenylisopropyl)-phenyl)-ortho-terephthalsäureester,
Tetrakis-(4-hydroxyphenyl)-methan,
1,4-Bis-((4',4''-dihydroxytriphenyl)-methyl)-benzol,
3,3-Bis-(4-hydroxyphenyl)-2-oxo-2,3-dihydroindol,
3,3-Bis-(4-hydroxy-3-methyl-phenyl)-2-oxo-2,3-dihydroindol.

Ferner geeignet sind die diesen Verbindungen entsprechenden Chlorkohlensäureester, sowie die Säuren oder bevorzugt die Säurechloride von mehr als 2-basigen aliphatischen oder aromatischen Carbonsäuren, also beispielsweise
2,4-Dihydroxybenzoesäure, bzw. 2,4-Dihydroxybenzoesäuredichlorid,
Trimesinsäure, bzw. Trimesinsäuretrichlorid,
Trimellithsäure, bzw. Trimellithsäuretrichlorid,
Cyanursäuretrichlorid,
wobei diese Verzweiger einzeln oder im Gemisch vorgelegt oder der Synthese portionsweise zugesetzt werden können.

Als Kettenabbrecher können bei der Polycarbonatsynthese Phenole, gegebenenfalls substituierte Phenole, deren Chlorkohlensäureester, Monocarbonsäuren, sowie deren Säurechloride, bevorzugt Cumylphenol, Phenol, p-tert.-Butylphenol und i-Octylphenol gegebenenfalls als Mischungen, mit den üblichen Verunreinigungen und Isomeren verwendet sein, wobei die Kettenabbrecher einzeln oder im Gemisch mit den Diphenolen vorgelegt oder der Synthese portionsweise zugesetzt werden können.

Die Herstellung der dem erfindungsgemäßen Verfahren zugänglichen bevorzugten Polycarbonate bzw. Polycarbonatgemische kann z.B. nach den folgenden bekannten Methoden (vgl. H. Schnell, "Chemistry and Physics of Polycarbonates", Polymer Review, Vol IX, Seite 27 ff., Interscience Publishers, New York, 1964) erfolgen:
1. Nach dem Schmelzumesterungsverfahren:
   In dem Schmelzumesterungsverfahren, wird unter Zugabe von Diphenylcarbonat in stöchiometrischen Mengen oder im Überschuß von bis zu 40 Gew%, unter stetiger destillativer Entfernung von Phenol und gegebenenfalls des Diphenylcarbonatüberschusses das Molekulargewicht aufkondensiert. Dieses Verfahren wird unter Verwendung üblicher Katalysatoren wie Alkalimetallionen, z.B. Li, Na, K, oder Übergangsmetallverbindungen, z.B. solchen auf Basis Sn, Zn, Ti, als einstufiges oder zweistufiges Verfahren, also mit einer eventuellen getrennten Aufkondensation der Oligomeren und des Polymeren, durchgeführt.
2. Nach dem Lösungsverfahren in disperser Phase, sogenanntes "Zweiphasengrenzflächenverfahren":
   Hierbei werden die einzusetzenden Diphenole in wäßriger alkalischer Phase gelöst. Dazu werden gegebenenfalls die zur Herstellung der erfindungsgemäßen Polycarbonate erforderlichen Kettenabbrecher in Mengen von 1,0 bis 20,0 Mol%, bezogen auf Mole Diphenol, in einer wäßrigen alkalischen Phase, vorzugsweise Natronlauge, gelöst, oder zu dieser und einer inerten organischen Phase, in Substanz zugegeben. Dann wird in Gegenwart einer inerten, vorzugsweise Polycarbonat-lösenden, organischen Phase mit Phosgen umgesetzt. Die Reaktionstemperatur liegt zwischen 0°C und 50°C.

Die Zugabe der erforderlichen Kettenabbrecher und Verzweiger kann auch während der Phosgenierung oder solange Chlorkohlensäureester in dem Synthesegemisch vorhanden sind, in Substanz, als Schmelze, als Lösung in Alkali oder inerten organischen Lösungsmitteln, zugegeben werden.

Die Reaktion kann durch Katalysatoren, wie tertiäre Amine oder Oniumsalze beschleunigt werden. Bevorzugt sind Tributylamin. Triethylamin und N-Ethylpiperidin.

Neben oder anstelle der Diphenole können auch deren Chlorkohlensäureester oder Bischlorkohlensäureester oder beide eingesetzt oder während der Synthese zudosiert werden.

Als Lösungsmittel sind alle diejenigen geeignet, die die Polycarbonate ausreichend lösen und die einen Siedepunkt von nicht mehr als 150°C aufweisen. Bevorzugte Lösungsmittel sind Dichlormethan, Monochlorbenzol, Toluol, Tetrahydrofuran oder 1,3-Dioxolan sowie Mischungen der genannten Lösungsmittel. Besonders bevorzugt ist Dichlormethan.

Die Ausgangslösungen von thermoplastischem Polymer, z.B. aromatischem Polycarbonat, im organischen Lösungsmittel haben eine Konzentration von 3 Gew% bis 25 Gew%, vorzugsweise von 5 Gew% bis 15 Gew%.

Der Wasserdampf kann in die Polymerlösung über ein T-förmiges Rohrstück oder eine Düse vom Ejektortyp, vorzugsweise eine Düse vom Ejektortyp eingemischt werden.

Der Wärmetauscher kann ein rohrförmiger Wärmetauscher bestehend aus einem Mantelrohr mit innerem Rohr, sein, bei dem das innere Rohr ein Verhältnis von Länge zu Durchmesser von 10000 bis 100, vorzugsweise von 1000 bis 2000 hat oder ein beliebiger Wärmetauscher mit der zum rohrförmigen Wärmetauscher äquivalenten Wärmeaustauschfläche sein.

Bei den einzusetzenden Apparaten zur Abscheidung und anschließender weiterer Aufkonzentration der Polymerlösungen bis zur reinen Schmelze besteht die eingangs erwähnte Mitreißgefahr von Polymerpartikeln oder Schmelzetröpfchen nicht, da es sich um großvolumige Apparate mit hoher Gasdurchlässigkeit der Einbauten und ausreichend großen Brüdenquerschnitten handelt. Durch die im Vergleich zu den mit Ausdampfdomen versehenen Extrudern längere Verweilzeit in den erfindungsgemäß verwendeten Apparaten kommt es zur Gleichgewichtseinstellung der von der Temperatur abhängigen Lösungsmittelkonzentration im Polymeren. Bei Verzicht auf den Einsatz hochsiedender Lösungsmittel liegt die Gleichgewichtstemperatur noch unterhalb der Glastemperatur des Polymers. Dadurch entstehen in dem Abscheider partiell Feststoffe bzw. erstarrte Schmelzen, die bei weiterer Energiezufuhr plastifizieren.

Der Antriebsteil einschließlich der rotierenden Einbauten bei den Apparaten muß daher eine ausreichende mechanische Stabilität aufweisen, um die beim Plastifizieren auftretenden Scherkräfte zu beherrschen. Die Viskosität reiner Schmelzen von marktüblichem, mittelviskosem Polycarbonat beträgt bei einer Temperatur unter 300°C über 10.000 Pa·s. Durch eine nicht zu vermeidende und hier auch erwünschte Vermischung von plastifizierter Schmelze mit etwas unterschiedlichen Lösungsmittelrestgehalten und erstarrter Schmelze bei einem kontinuierlichen Betrieb werden lokal hohe Belastungen, die sich durch Drehmomentspitzen bemerkbar machen, vermindert. Der integrale Energieeintrag als spezifische Knetenergie, bezogen auf den Austragsdurchsatz als entgaste Schmelze, ist so hoch, daß er bisher nur in Apparaten wie z.B. Schneckenextrudern erreicht wurde, die wegen, wie bereits vorstehend ausgeführt, des hohen Staudruckes durch die Brüden nicht ohne Zugabe eines hochsiedenden Lösungsmittels, wie z.B. Monochlorbenzol wirtschaftlich im Verdampfungsverfahren eingesetzt werden können.

Eine Trockenapparatur mit rotierenden Einbauten zur Abreinigung ihrer Wände ist z.B. in der Schrift US 5 407 266 beschrieben. Das Gerät wurde für den erfindungsgemäßen Einsatz geändert. Die auf den Wellen in Apparatelängsrichtung angeordneten, gemäß Patentanspruch 1 und 2 von US 5 407 266 U-förmig ausgebildeten Barren wurden wegen ihrer zu geringen mechanischen Stabilität für den erfindungsgemäßen Einsatz durch gerade Barren mit erheblich vergrößertem Querschnitt ersetzt. Außerdem wurde die produktseitige Winkelstellung der Barren von 90° für die U-förmigen Barren auf >90° für die geraden Barren verändert, um die Schabwirkung der Barren zu erhöhen.

Die in EP 0 460 466 A1 sowie EP 0 528 210 A1 beanspruchten Apparate sind ebenfalls für den Einsatz im erfindungsgemäßen Verfahren grundsätzlich geeignet.
Die dort beschriebenen Konstruktionen erlauben ebenfalls eine Änderung der Barrenform mit einer ausreichenden Stabilität für den erfindungsgemäßen Einsatz.

Die als Zwischenabscheider bezeichneten Abscheider bei mehrstufiger Konzentrierung der Polycarbonatlösungen sind druckfeste zylindrische Behälter, die über einen mit einer geeigneten Schmelzepumpe versehenen konischen Auslauf verfügen.

Die nachfolgend beschriebenen Figuren (Fig. 1 bis 7) stellen Beispiele für Geräteanordnungen dar, die zur Durchführung des Verfahrens geeignet sind.

Es zeigen
Figur 1 eine schematisierte Geräteanordnung zur Durchführung des erfindungsgemäßen Verfahrens.
Figur 2 zeigt eine Modifikation von der Anordnung nach Fig. 1 mit zusätzlicher Wasserdampfstrippung.
Figur 3 zeigt eine Anordnung vergleichbar Figur 2 mit einem zusätzlichen Abscheider ohne rotierende Einbauten.
Figur 4 zeigt eine Variante der Anordnung gemäß Figur 3, wobei die Wasserdampfstrippung und Wasserabscheidung fehlt.
Figur 5 zeigt eine Anordnung zur Durchführung des erfindungsgemäßen Verfahrens, bei der zwischen Granulierung und Trockner im Trockenapparat mit rotierenden Einbauten ein Extruder mit Entgasungszone zwischengeschaltet ist.
Figur 6 zeigt eine apparative Variante zu Figur 1, in der anstelle des Austragsextruders ein Strangverdampfer vor der Granulierung eingesetzt wird.
Figur 7a und 7b zeigen schematisch die Geometrie der Knetbarren eines bekannten (Figur 7a) und eines modifizierten (Figur 7b) Trockenapparates in Seiten- und Vordersicht.

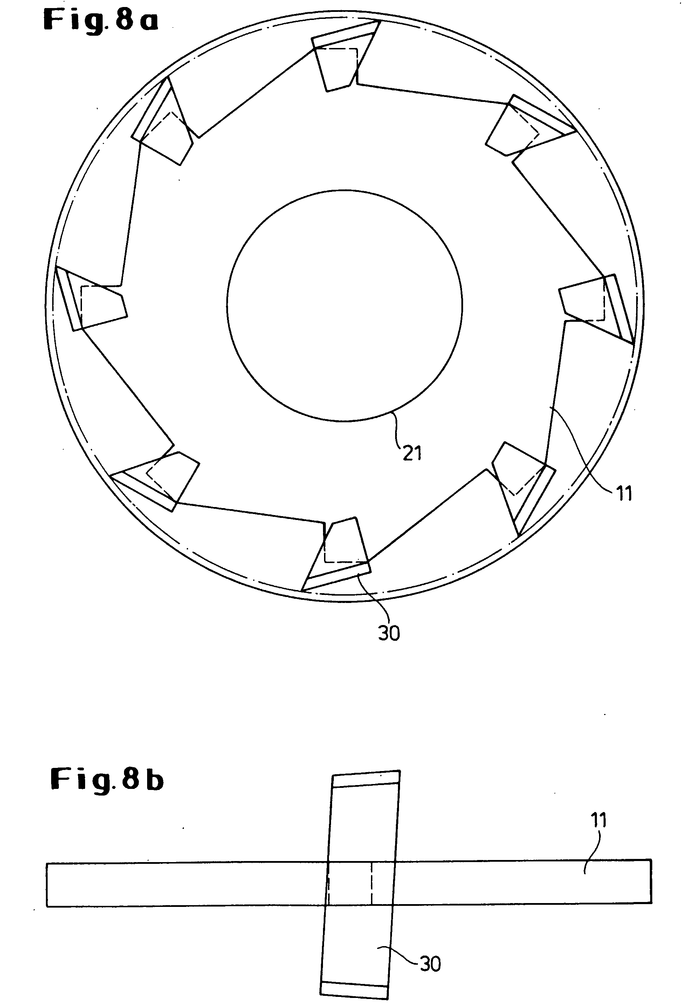

Figur 8 zeigt einen Querschnitt durch eine Knetscheibe mit Knetbarren eines einzusetzenden Trockenapparates in Seitenansicht Figur 8a und Aufsicht Figur 8b.

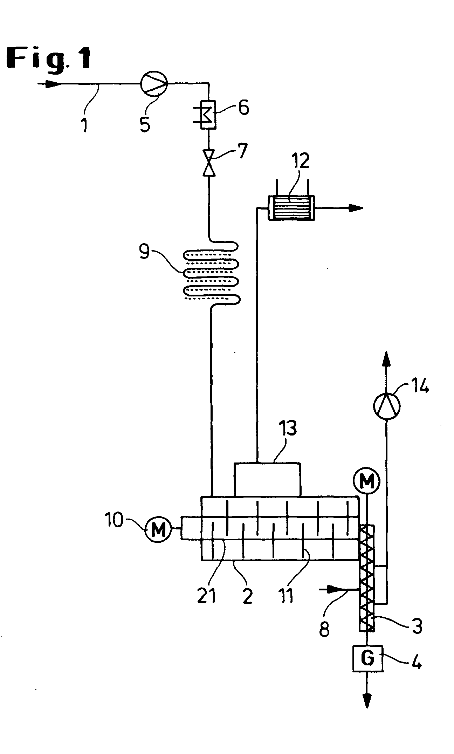

Die Polymerlösung 1 wird beispielsweise entsprechend der Anordnung nach Figur 1 über eine Pumpe 5 einem ersten Wärmetauscher 6 und anschließend über ein Druckregelventil 7 einem zweiten Wärmetauscher 9 zugeführt und in den einzusetzenden Trockner 2 zur Entgasung eingelassen, im Brüden in über den Abzug 13 einem Abscheider 12 zur Isolierung des Lösungsmittels zugeführt. Die Schmelze wird über einen Austragsextruder 3, gegebenenfalls unter Zufügung von Inertgas 8 zur Granuliereinrichtung 4 ausgetragen. Weitere Lösungsmittelreste werden mit Hilfe der Pumpe 14 aus dem Austragsextruder abgezogen.

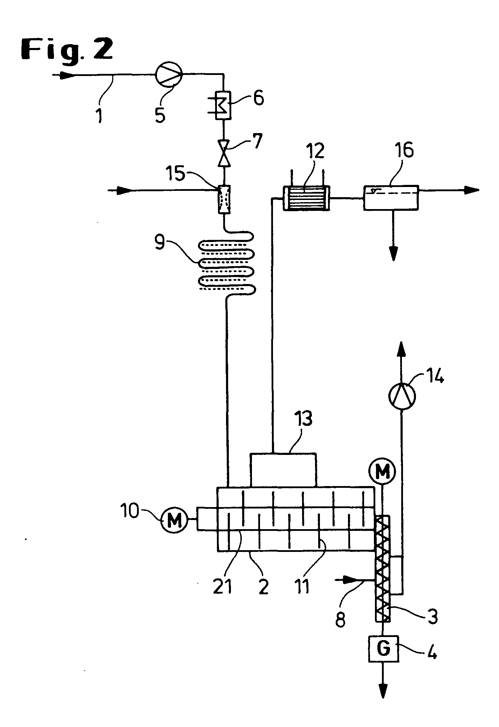

In der Variante des erfindungsgemäßen Verfahrens nach Figur 2 wird in einer Düse 15 hinter dem Zwischenventil 7 und dem zweiten Wärmetauscher 9 Wasserdampf zugespeist. Das Wasser wird mittels eines Abscheiders 16 vom Lösungsmittel befreit, das zusammen mit dem Wasser in den Brüden des Mischers 2 anfällt.

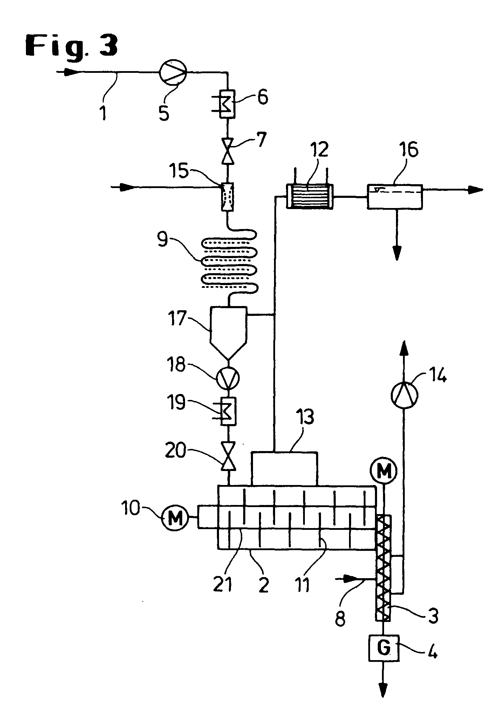

In der Variante des Verfahrens, das von einer Anordnung entsprechend Figur 3 Gebrauch macht, ist zwischen dem zweiten Wärmetauscher 9 und dem Trockenapparat 2 ein weiterer Abscheider 17 ohne rotierende Einbauten, eine Pumpe 18, ein dritter Wärmetauscher 19, sowie ein weiteres Druckregelventil 20 vorgesehen.

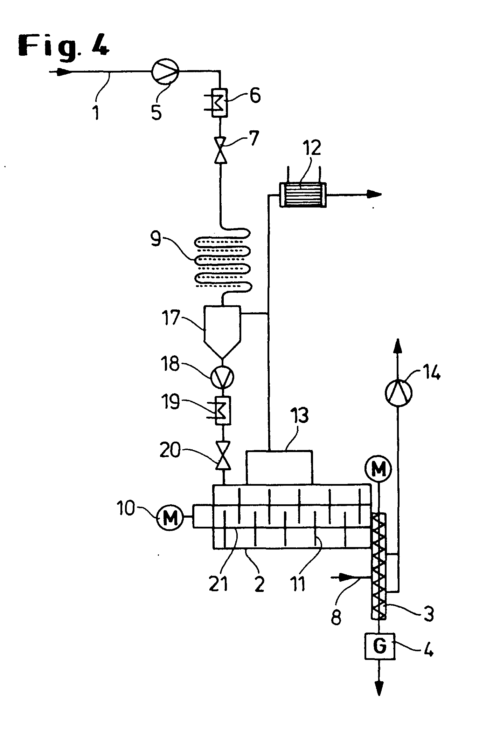

Die in Figur 3 skizzierte Wasserdampfstrippung kann auch weggelassen werden, wodurch gegenüber einer Anordnung entsprechend Figur 3 die Wasserdampfdüse 15 und der Wasserabscheider 16 wegfallen können (siehe Fig.4).

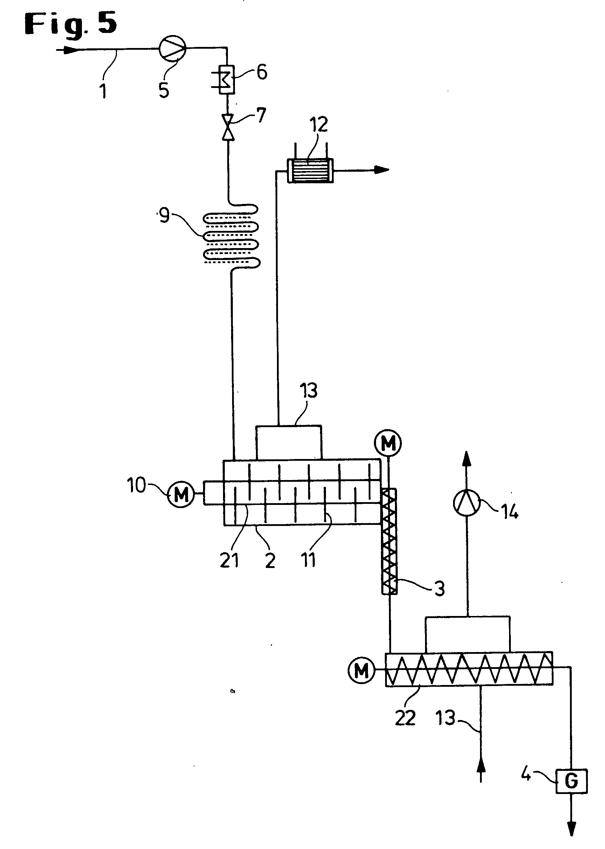

Anstelle der Entgasung im Austragsextruder 3 kann die Entgasung in einem zwischen Austragsextruder 3 und Granuliervorrichtung 4 zwischengeschalteten zusätzlichen Extruder 22 mit Entgasungszone erfolgen (Fig. 5).

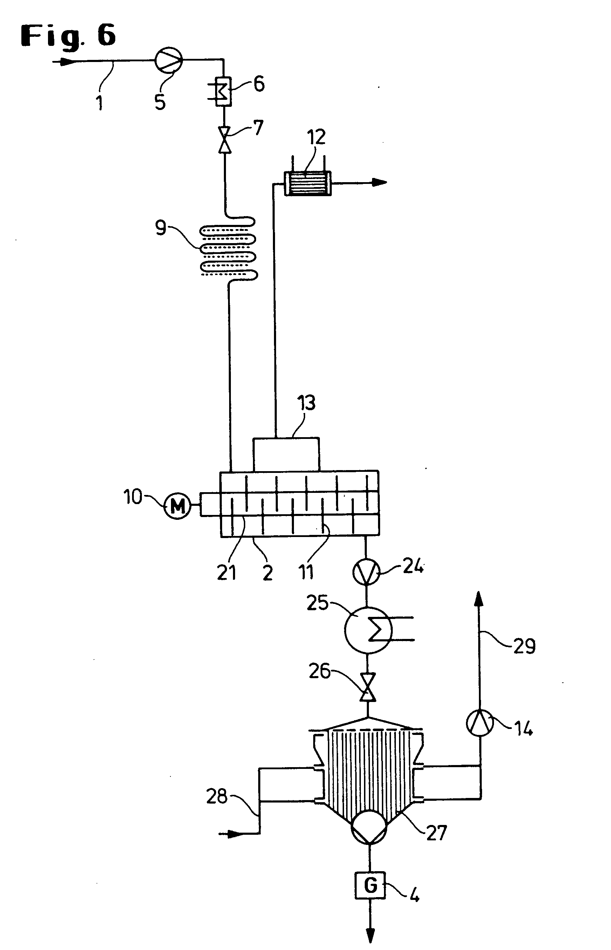

Gegebenenfalls wird in einer Variante der Austragsextruder 3 gemäß der Anordnung in Figur 1 (siehe Fig. 6) durch eine Kombination von Schmelzepumpe 24, Wärmetauscher 25, Druckregelventil 26 und Strangverdampfer 27 mit Inertgaszuleitung 28 und Abgasableitung 29 ersetzt.

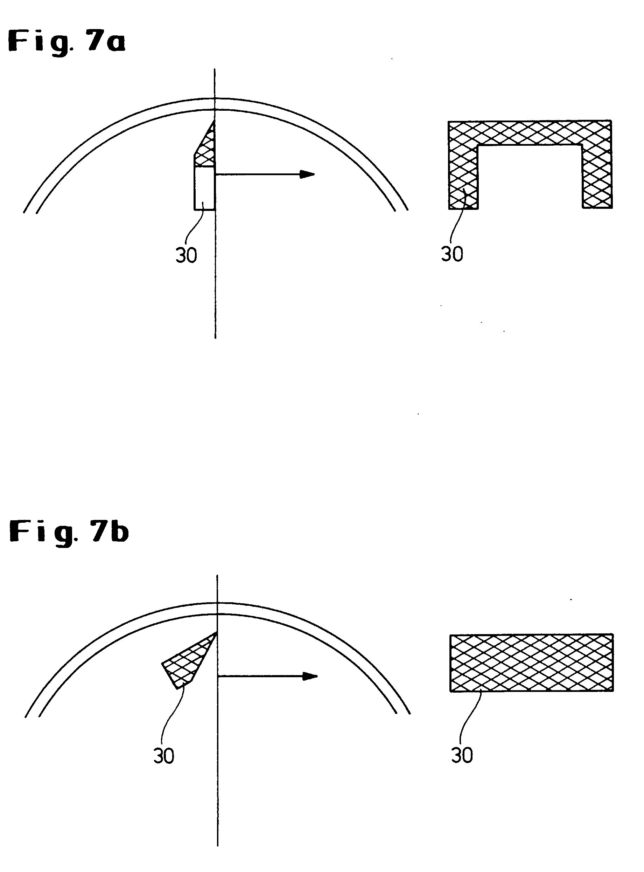

Die Knetbarren 30 konventioneller, großvolumiger Trockenapparate auf den Knetscheiben 11 wurde hinsichtlich ihrer Geometrie so verändert, dass der produktseitige Anstellwinkel größer als 90° beträgt und die Barren stark vergrößert sind (siehe Figur 7a und 7b).

### Beispiele

### Beispiel 1

60 kg Polycarbonat auf Basis Bisphenol A mit einem mittleren Molekulargewicht von M_{W}= 29800 werden in 340 kg Dichlormethan gelöst. Von dieser 15 %igen Polycarbonatlösung werden 70 kg/h in einer aus einem T-stückförmigem Rohrteil gebildeten Düse mit 7,2 kg/h Wasserdampf mit einer Temperatur von 195°C und einem Druck von 14,5 bar gemischt. Diese Mischung wurde durch ein Rohr mit einem inneren Durchmesser von 6 mm, einer Wandstärke von 1 mm und einer Länge von 6 m geleitet. Das Rohr ist mit einem Mantelrohr umgeben, das einen äußeren Durchmesser von 18 mm und eine Wandstärke von 1,5 mm aufweist. Die Temperatur der Polycarbonatlösung in Dichlormethan betrug 23°C, die Temperatur des Heizmediums Wasserdampf im äußeren Rohr 165°C.

Die aus dem Rohr austretende pastöse Mischung wurde in die an der Austragsseite liegende Brüdenabzugsöffnung eines Apparats der Fa. LIST, LIST AP 12 mit einem Volumen von 30 l, dessen Wellen verstärkt wurden, entspannt. Die entstehenden Brüden wurden über den zweiten Brüdendom des Geräts zu einem Kondensator geleitet. Die Kühlmitteltemperatur betrug 12 °C.

Das Gehäuse und die Wellen des LIST-Apparates wurden mit einem Wärmeträgeröl, dessen Eingangstemperatur konstant auf 250°C gehalten wurde, beheizt. 25 Minuten nach Versuchsbeginn wurde kontinuierlich Schmelze mittels der Austragsschnecke, die mit zwei Vakuumentgasungsstutzen und einer Schleppgaseinmischzone versehen ist, aus dem Apparat ausgetragen und durch eine Düse gepreßt. Der aus der Düse austretende Schmelzestrang wurde in einem Wasserbad abgekühlt und granuliert. Die nach vierstündigem Betrieb erhaltene Granulatprobe wurde analysiert. Die Eigenschaften des Granulats sind in Tabelle 1 beschrieben. Der Druck in den Vakuumentgasungsdomen betrug 0,5 mbar vor der Schleppgaseinmischzone und 1,5 mbar hinter der Schleppgaseinmischzone. Als Schleppgas wurden 50 g N₂/h bei einem Druck von 40 bar verwendet. Die Fadentemperatur des Schmelzestranges betrug an der Düsenplatte 305 °C.

### Beispiel 2

39 kg/h der unter Beispiel 1 beschriebenen Polycarbonatlösung wurden wie in Beispiel 1 dargestellt mit 0,9 kg/h Wasserdampf mit einer Temperatur von 220°C und einem Druck von 30 bar in einer Düse gemischt. Die Temperatur des Heizmediums Wasserdampf zur Beheizung des rohrförmigen Wärmetauschers wurde auf 220°C erhöht. Die aus dem rohrförmigen Wärmetauscher austretende Mischung wurde wie im Beispiel 1 angegeben behandelt. Die Eigenschaften des hier erhaltenen Granulats sind in Tabelle 1 beschrieben.

### Beispiel 3

42 kg/h der unter Beispiel 1 beschriebenen Polycarbonatlösung wurden wie in Beispiel 1 dargestellt, jedoch ohne Wasserdampfeinmischung, mit einem Vordruck von 35 bar durch den unter Beispiel 1 beschriebenen rohrförmigen Wärmetauscher gepumpt und die entstehende Mischung in das unter Beispiel 1 genannte LIST-Gerät entspannt und wie dort weiter behandelt. Die Temperatur des Heizmediums Wasserdampf zur Beheizung des rohrförmigen Wärmetauschers wurde auf 220°C erhöht. Die Eigenschaften des hier erhaltenen Granulats sind in Tabelle 1 beschrieben.

### Beispiel 4

73 kg/h der unter Beispiel 1 beschriebenen Polycarbonatlösung wurden wie in Beispiel 1 dargestellt, jedoch ohne Wasserdampfeinmischung mit einem Vordruck von 35 bar durch das unter Beispiel 1 beschriebene Wärmetauscherrohr gepumpt. Der rohrförmige Wärmetauscher wurde bei gleichem Querschnitt auf 12 m verlängert. Die Temperatur des Heizmediums Wasserdampf wurde auf 220°C erhöht. Die Abscheidung der aus dem rohrförmigen Wärmetauscher austretenden Mischung erfolgte in analoger Weise zu Beispiel 1. Die Eigenschaften des hier erhaltenen Granulats sind in Tabelle 1 beschrieben.

### Beispiel 5

68 kg/h der unter Beispiel 1 beschriebenen Polycarbonatlösung wurden mit einem Vordruck von 35 bar in einem Mischer-Wärmetauscher SMR mit einer Wärmeaustauschfläche von 0,106 m² der Fa. Sulzer, der mit Wasserdampf (220°C) beheizt wurde, erhitzt. Die heiße, aus dem Mischer-Wärmetauscher austretende Lösung wurde durch den unter Beispiel 1 beschriebenen 6 m langen rohrförmigen Wärmetauscher geleitet, jedoch ohne Wasserdampfeinmischung, und wie unter Bespiel 1 ausgeführt in den LIST-Apparat entspannt. Die Temperatur des Heizmediums Wasserdampf zur Beheizung des rohrförmigen Wärmetauscher betrug 220°C. Die Eigenschaften des hier erhaltenen Granulats sind in Tabelle 1 beschrieben.

### Beispiel 6

47 kg/h der unter Beispiel 1 beschriebenen Polycarbonatlösung wurden wie in Beispiel 4 dargestellt behandelt. Jedoch wurde zum Austrag der Schmelze aus dem LIST-Gerät eine Austragsschnecke ohne Entgasungseinrichtung und ohne Schleppgaseinmischung verwendet. Die mittels Extruder aus dem LIST-Gerät ausgetragene Schmelze wurde in einer beheizten Rohrleitung, Innendurchmesser 12 mm, Länge 1,3 m zu einem ZSK 34 der Fa. Werner & Pfleiderer, der mit zwei Entgasungsdomen und einer Schleppgaszone ausgerüstet ist, geleitet. Der Druck in den Vakuumentgasungsdomen betrug 0,2 mbar vor der Schleppgaseinmischzone und 1,3 mbar hinter der Schleppgaseinmischzone. Als Schleppgas wurden 50 g N₂/h bei einem Druck von 40 bar verwendet. Die Fadentemperatur des Schmelzestranges betrug an der Düsenplatte 320°C. Die Eigenschaften des hier erhaltenen Granulats sind in Tabelle 1 beschrieben.

### Beispiel 7

41 kg/h der unter Beispiel 1 beschriebenen Polycarbonatlösung wurden wie in Beispiel 6 dargestellt behandelt. Jedoch wurde zum Austrag der Schmelze aus dem LIST-Gerät eine Schmelzepumpe eingesetzt. Die mittels Schmelzepumpe aus dem LIST-Gerät ausgetragene Schmelze wurde mittels beheizter Rohrleitung, Innendurchmesser 12 mm, Länge 0,3 m zu einem Strangverdampfer geleitet und hier entgast. Der Druck im Strangverdampfer betrug 0,8 mbar. Die Schmelze aus dem Strangverdampfer wurde mittels Schmelzepumpe durch eine Düse, Durchmesser 3,5 mm, gepreßt, der entstehende Schmelzestrang wurde in einem Wasserbad abgekühlt und granuliert. Die Fadentemperatur an der Düse betrug 290 °C. Die Eigenschaften des hier erhaltenen Granulats sind in Tabelle 1 beschrieben.

### Beispiel 8

81 kg/h der unter Beispiel 1 beschriebenen Polycarbonatlösung wurden wie in Beispiel 5 beschrieben mit einem Vordruck von 40 bar in einem Mischer-Wärmetauscher SMR mit einer Wärmeaustauschfläche von 0,106 m² der Fa. Sulzer, der mit Wasserdampf (165°C) beheizt wurde, erhitzt. Die heiße, aus dem Mischer-Wärmetauscher austretende Lösung wurde durch den unter Beispiel 1 beschriebenen 6 m langen rohrförmigen Wärmetauscher geleitet, jedoch ohne Wasserdampfeinmischung, und in einen zylindrischen Abscheider, der mit einem konischen Auslaufteil versehen ist, mit einem Volumen von 60 l unter einem Druck von 5 bar entspannt. Die Brüden wurden über eine obere Öffnung mit einer lichten Weite von 10 mm abgeleitet und in einen Kondensator entspannt. Die Temperatur des Heizmediums Wasserdampf zur Beheizung des rohrförmigen Wärmetauschers betrug 165°C. Die in dem vorstehend beschriebenen Behälter abgeschiedene Masse wurde mittels Fangpumpe durch einen Mischer-Wärmetauscher SMR mit einer Wärmeaustauschfläche von 0,106 m² der Fa. Sulzer gepumpt, der mit Wasserdampf (165°C) beheizt wurde, und in den unter Beispiel 1 beschriebenen LIST-Apparat über ein Entspannungsventil, das auf 5 bar eingestellt wurde, entspannt. Die weitere Aufkonzentration der Mischung erfolgt wie unter Beispiel 1 ausgeführt. Die Eigenschaften des hier erhaltenen Granulats sind in Tabelle 1 beschrieben.

### Vergleichsbeispiel 1

39 kg/h der unter Beispiel 1 beschriebenen Polycarbonatlösung wurden wie unter Beispiel 8 ausgeführt vorkonzentriert. Die aus dem SMR-Wärmetauscher austretende Masse wurde direkt in einen Zweischneckenkneter mit kämmenden Schnecken gefördert. Der Zweischneckenkneter ist mit zwei Entgasungsdomen versehen, der erste Entgasungsdom wurde bei unter einem Druck von 3 bar gehalten, der zweite bei einem Druck von 10 mbar. Der Durchmesser D der Schnecken beträgt 48 mm, die Gesamtlänge 1440 mm. Die Extrudergehäuse wurden auf der gesamten Länge auf eine Temperatur von 270°C beheizt, die Temperatur der Düse wurde bei 220°C gehalten. Die Extruder-Drehzahl betrug 50 UpM. Die Eigenschaften des extrudierten Polycarbonats sind in Tabelle 1 aufgekistet.

### Vergleichsbeispiel 2

Zu 85 kg der der wie in Beispiel 1 hergestellten 15 %igen Lösung von Polycarbonat in Dichlormethan wird 72 kg Monochlorbenzol eingemischt. Diese Lösung wird mittels Dünnschichtverdampfer soweit aufkonzentriert, daß eine Lösung von 50 % Polycarbonat erhalten wird. Als Heizmedium wurde auf 150°C überhitzter Wasserdampf verwendet.

30 kg/h der vorstehend beschriebenen Lösung wird über eine auf 150°C beheizte Leitung in einen Zweischneckenkneter mit kämmenden Schnecken gefördert. Der Zweischneckenkneter ist mit zwei Entgasungsdomen versehen, der erste Entgasungsdom wurde bei Normaldruck betrieben, der zweite bei einem Druck von 1 mbar. Der Durchmesser D der Schnecken beträgt 48 mm, die Gesamtlänge 1440 mm. Die Extrudergehäuse wurden auf der gesamten Länge auf eine Temperatur von 270°C beheizt, die Temperatur der Düse wurde bei 220°C gehalten. Die Extruder-Drehzahl betrug 50 UpM. Die Eigenschaften des extrudierten Polycarbonats sind in Tabelle 1 aufgelistet.

**Tabelle 1**

| | DCM-Restgehalt nach Entgasung (ppm) | Org. geb. Chlor (ppm) | Yellowness-Index YI | ViskositätsAbbau (Δ rel. Viskosität) |
|---|---|---|---|---|
| Beispiel 1 | < 0,2 | < 0,1 | 1,6 | < 0,001 |
| Beispiel 2 | < 0,2 | < 0,1 | 1,9 | < 0,001 |
| Beispiel 3 | < 0,2 | < 0,1 | 2,2 | < 0,001 |
| Beispiel 4 | < 0,2 | < 0,1 | 2,3 | < 0,001 |
| Beispiel 5 | < 0,2 | < 0,1 | 2,9 | 0,002 |
| Beispiel 6 | < 0,2 | < 0,1 | 2,7 | 0,005 |
| Beispiel 7 | < 0,2 | < 0,1 | 2,4 | < 0,001 |
| Beispiel 8 | < 0,2 | < 0,1 | 2,9 | < 0,001 |
| Vergleichsbeispiel 1 | 8 | 14 | 6,5 | 0,005 |
| Vergleichsbeispiel 2 | < 0,2 | 120* | 3,5 | 0,006 |
| DCM - Dichlormethan | | | | |

| | | | | |
|---|---|---|---|---|
| * aus Restlösemittelgehalt (Monochlorbenzol) | | | | |

## Patentansprüche

1. Verfahren zur Herstellung von Polymergranulaten aus Polymerlösungen thermoplastischer Polymere durch Vorkonzentrierung der Polymerlösung mittels Wärmetauschung oder Strippen des Lösungsmittels mit Wasserdampf in einem Verweilrohr oder einem Wärmetauscher zu konzentrierter Polymerlösung bzw. -paste, weitere Aufkonzentrierung und Trocknung in einer Trockenapparatur, Extrudieren und Granulieren des getrockneten Polymers,
wobei die Polymerlösung mit einer Polymerkonzentration von 3 bis 30 Gew.-%, vorzugsweise von 15 bis 25 Gew.-% in organischem Lösungsmittel in einem oder mehreren Wärmetauschern, deren gesamte Wärmeaustauschfläche 0,02 m²/100 kg/h Lösungsmittel bis 2 m²/100 kg/h Lösungsmittel beträgt, unter einem Druck von 1 bis 15 bar auf 50 bis 300°C erhitzt wird,
oder durch Mischen mit überhitztem Wasserdampf einer Temperatur von 100 bis 300°C, vorzugsweise von 140 bis 250°C, in einem Lösemittel zu Wasserdampf-Verhältnis von mindestens 10:1, in einem beheizten oder unbeheizten Verweilrohr mit einem Länge zu Durchmesser-Verhältnis von 100 bis 10000 erhitzt wird,
oder durch Mischen mit Wasserdampf einer Temperatur von 100 bis 300°C, und einem Druck von 1 bis 100 bar in einem Wärmetauscher, dessen Wärmeaustauschfläche 0,02 m²/100 kg/h Lösungsmittel bis 2 m²/100 kg/h Lösungsmittel beträgt, erhitzt wird
und die so erhitzte Mischung durch Entspannung in einen Zwischenabscheider oder Trockenapparat, der mit rotierenden Einbauten versehen ist, unter Abtrennung der Brüden zu konzentrierter Polymerlösung oder -paste mit einer Konzentration von 25 bis 80 Gew.-% der konzentrierten Paste bzw. Lösung, bezogen auf das Polymer und gegebenenfalls kondensierten Wasserdampf aufkonzentriert und abgeschieden wird,
bei dem die aufkonzentrierte Polymerlösung oder Paste in dem Trockenapparat, der zur mechanischen Abreinigung der Apparatewände und zum Stofftransport mit rotierenden Einbauten versehen ist, durch Beheizung des Gehäusemantels oder durch Beheizung der rotierenden Einbauten oder durch Beheizung von Gehäusemantel und rotierenden Einbauten sowie durch die sich in dem abgeschiedenen Gut bewegenden Einbauten verursachte Scherung bis zur Schmelze erwärmt und weiter aufkonzentriert bzw. entgast wird, wobei die Temperatur der Apparatewand bzw. der Einbauten von 150 bis 400°C beträgt,
beidem die Aufkonzentrierung und die Entgasung bei einem Innendruck von 1 mbar bis 5 bar erfolgt, gegebenenfalls auch unter Zugabe von Inertgas oder Wasserdampf,
wobei ferner der integrale Energieeintrag als auf den Austragsdurchsatz bezogene spezifische Knetenergie 0,01 bis 1 kWh pro kg trockene Polymerschmelze beträgt und die Verweilzeit im Trockner von 5 bis 90 Minuten beträgt.

2. Verfahren nach Anspruch 1, dadurch gekennzeichnet, daß das Länge zu Durchmesser-Verhältnis des Verweilrohres von 1000 bis 2000 beträgt.

3. Verfahren nach Anspruch 1, dadurch gekennzeichnet, daß die Vorkonzentrierung durch Mischen mit Wasserdampf einer Temperatur von 200 bis 250°C und bei einem Druck von 16 bis 30 bar erfolgt.

4. Verfahren nach den Ansprüchen 1 bis 3, dadurch gekennzeichnet, daß die Aufkonzentrierung bis zu einem Polymergehalt von 35 bis 60 Gew.-% erfolgt.

5. Verfahren nach den Ansprüchen 1 bis 4, dadurch gekennzeichnet, daß die Temperatur der Apparatewandbeheizung bzw. der Einbauten des Trockenapparates von 200 bis 300°C, insbesondere von 240 bis 250°C beträgt.

6. Verfahren nach den Ansprüchen 1 bis 5, dadurch gekennzeichnet, daß die Trocknung im Trockenapparat bei Normaldruck unter Zugabe von Inertgas oder Wasserdampf erfolgt.

7. Verfahren nach den Ansprüchen 1 bis 6, dadurch gekennzeichnet, daß der integrale Energieeintrag der rotierenden Einbauten des Trockenapparates von 0,05 bis 0,5 kWh pro kg, insbesondere von 0,1 bis 0,3 kWh pro kg trockene Polymerschmelze beträgt.

8. Verfahren nach den Ansprüchen 1 bis 7, dadurch gekennzeichnet, daß die Verweilzeit in der Trockenapparatur von 15 bis 20 Minuten beträgt.

9. Verfahren nach den Ansprüchen 1 bis 8, dadurch gekennzeichnet, daß als thermoplastisches Polymer Polycarbonat, Polyestercarbonat, Polyalkylenterephthalat, EPDM-Polymerisat, Polystyrol sowie Polystyrolco- oder Pfropfcopolymere verwendet werden.

10. Verfahren nach Anspruch 9, dadurch gekennzeichnet, daß das thermoplastische Polymer ein aromatisches Polycarbonat oder ein Acrylnitril-, Butadien-, Styrol-, Pfropfcopolymer (ABS) ist.

11. Verfahren nach Anspruch 10, dadurch gekennzeichnet, daß ein aromatisches Polycarbonat verwendet wird, mit einem Molekulargewicht charakterisiert durch die Lösungsviskosität ηᵣₑₗ von 1,15 bis 1,40, insbesondere von 1,20 bis 1,35.

## Claims

1. A process for producing granulated polymer materials from polymer solutions of thermoplastic polymers by pre-concentration of the polymer solution by means of heat exchange or stripping the solvent with steam in a holding tube or a heat exchanger to form concentrated polymer solution or paste, further concentration and drying in a drying apparatus, extrusion and granulation of the dried polymer,
wherein the polymer solution, comprising a polymer concentration of 3 to 30 % by weight, preferably of 15 to 25 % by weight, in an organic solvent, is heated to 50 to 300°C under a pressure of 1 to 15 bar in one or more heat exchangers, the total heat exchange surface of which is 0.02 m²/100 kg/hr solvent to 2 m²/100 kg/hr solvent,
or is heated by mixing with superheated steam at a temperature from 100 to 300°C, preferably from 140 to 250°C, at a solvent to steam ratio of at least 10:1 in a heated or unheated holding tube having a length to diameter ratio of 100 to 10,000,
or is heated by mixing with steam at a temperature of 100 to 300°C and at a pressure of 1 to 100 bar in a heat exchanger, the heat exchange surface of which is 0.02 m²/100 kg/hr solvent to 2 m²/100 kg/hr solvent,
and the mixture which is heated in this manner is concentrated and separated by flashing into an intermediate separator or drying apparatus which is provided with rotating built-in components, with separation of the vapours into a concentrated polymer solution or paste with a concentration of 25 to 80 % by weight of the concentrated paste or solution with respect to the polymer, and into steam which is optionally condensed,
wherein the concentrated polymer solution or paste is heated until it melts and is further concentrated or degassed in the drying apparatus, which is provided with rotating built-in components for mechanically cleaning off the apparatus walls and for mass transfer, by heating the housing jacket or by heating the rotating built-in components or by heating the housing jacket and the rotating built-in components, and by the shearing caused by the built-in components moving in the separated material, wherein the temperature of the apparatus wall or of the built-in components is from 150 to 400°C,
wherein concentration and degassing are effected at an internal pressure of 1 mbar to 5 bar, optionally with the addition of inert gas or steam also,
wherein in addition the total energy input expressed as the specific kneading energy with respect to the discharge throughput is 0.01 to 1 kWh per kg of dry polymer melt, and the dwell time in the drier is from 5 to 90 minutes.

2. A process according to claim 1, characterised in that the length to diameter ratio of the holding tube is 1000 to 2000.

3. A process according to claim 1, characterised in that pre-concentration is effected by mixing with steam at a temperature of 200 to 250°C and at a pressure of 16 to 30 bar.

4. A process according to claims 1 to 3, characterised in that pre-concentration is effected to a polymer content of 35 to 60 % by weight.

5. A process according to claims 1 to 4, characterised in that the temperature to which the apparatus wall or the built-in components of the drying apparatus are heated is from 200 to 300°C, particularly from 240 to 250°C.

6. A process according to claims 1 to 5, characterised in that drying is effected in the drying apparatus at normal pressure with the addition of inert gas or steam.

7. A process according to claims 1 to 6, characterised in that the total energy input of the rotating built-in components of the drying apparatus is from 0.05 to 0.5 kWh per kg, particularly from 0.1 to 0.3 kWh per kg, of dry polymer melt.

8. A process according to claims 1 to 7, characterised in that the dwell time in the drying apparatus is from 15 to 20 minutes.

9. A process according to claims 1 to 8, characterised in that polycarbonate, polyester carbonate, polyalkylene terephthalate, EPDM polymer, polystyrene, as well as polystyrene copolymers or graft copolymers, are used as the thermoplastic polymer.

10. A process according to claim 9, characterised in that the thermoplastic polymer is an aromatic polycarbonate or an acrylonitrile-butadiene-styrene graft copolymer (ABS).

11. A process according to claim 10, characterised in that an aromatic polycarbonate is used which has a molecular weight characterised by a solution viscosity η_{rel.} of 1.15 to 1.40, particularly of 1.20 to 1.35.

## Revendications

1. Procédé de préparation de granulés de polymère à partir de solutions de polymère thermoplastique, par préconcentration de la solution de polymère par échange de chaleur ou séparation du solvant par entraînement à la vapeur d'eau dans un tube de séjour ou un échangeur de chaleur, pour obtenir une solution ou une pâte concentrée de polymère, poursuite de la concentration et séchage dans un appareil de séchage, extrusion et granulation du polymère séché, dans lequel
la solution de polymère, à une concentration en polymère de 3 à 30 % en poids, de préférence de 15 à 25 % en poids dans un solvant organique,
est chauffée entre 50° C à 300° C dans un ou plusieurs échangeurs de chaleur dont la surface totale d'échange de chaleur est de 0,02 m²/100 kg/h de solvant à 2 m²/100 kg/h de solvant, sous une pression de 1 à 15 bars,
ou est chauffée par mélange avec de la vapeur d'eau surchauffée à une température de 100 à 300° C, de préférence de 140 à 250°C, dans un rapport solvant/vapeur d'eau d'au moins 10:1, dans un tube de stationnement chauffé ou non chauffé présentant un rapport longueur/diamètre de 100 à 10 000,
ou est chauffée par mélange avec de la vapeur d'eau à une température de 100 à 300° C et à une pression de 1 à 100 bars dans un échangeur de chaleur dont la surface d'échange de chaleur est de 0,02 m²/100 kg/h de solvant à 2 m²/10à kg/h de solvant,
et le mélange ainsi chauffé est concentré et séparé par détente dans un séparateur intermédiaire ou dans un appareil de séchage qui est doté de garnitures rotatives, avec séparation des vapeurs pour obtenir une solution concentrée ou une pâte concentrée de polymère à une concentration de 25 à 80 % en poids de la pâte ou de la solution concentrée, pourcentage calculé par rapport au polymère et éventuellement par rapport à la vapeur d'eau condensée,
dans lequel la solution ou la pâte de polymère concentrée est réchauffée jusqu'à l'état fondu et concentrée davantage ou dégazée dans l'appareil de séchage qui est doté de garnitures rotatives pour le nettoyage mécanique des parois de l'appareil et pour le transport des matières, par chauffage de l'enveloppe ou par chauffage des garnitures rotatives ou par chauffage de l'enveloppe et des garnitures rotatives, ainsi que par le cisaillement provoqué par les garnitures qui se déplacent dans le produit séparé, la température de la paroi de l'appareil ou des garnitures étant de 150 à 400° C,
la concentration et le dégazage s'effectuant à une pression interne de 1 mbar à 5 bars, de préférence à pression normale, éventuellement avec addition de gaz inerte ou de vapeur d'eau,
et en outre l'apport total d'énergie en tant qu'énergie spécifique de pétrissage rapportée au débit d'extraction est de 0,01 à 1 kWh par kg de polymère fondu séché, le temps de séjour dans le séchoir étant de 5 à 90 minutes.

2. Procédé selon la revendication 1, caractérisé en ce que le rapport de la longueur au diamètre du tube de séjour est de 1 000 à 2 000.

3. Procédé selon la revendication 1, caractérisé en ce que la préconcentration s'effectue par mélange avec de la vapeur d'eau à une température de 200 à 250° C et sous une pression de 16 à 30 bars.

4. Procédé selon les revendications 1 à 3, caractérisé en ce que la concentration s'effectue jusqu'à une teneur en polymère de 35 à 60 % en poids.

5. Procédé selon les revendications 1 à 4, caractérisé en ce que la température du chauffage des parois de l'appareil ou des garnitures de l'appareil de séchage est de 200 à 300° C, en particulier de 240 à 250° C.

6. Procédé selon les revendications 1 à 5, caractérisé en ce que le séchage dans l'appareil de séchage s'effectue sous pression normale avec addition de gaz inerte ou de vapeur d'eau.

7. Procédé selon les revendications 1 à 6, caractérisé en ce que l'apport total d'énergie aux garnitures rotatives de l'appareil de séchage est de 0,05 à 0,5 kWh par kg, en particulier de 0,1 à 0,3 kWh par kg de polymère fondu séché.

8. Procédé selon les revendications 1 à 7, caractérisé en ce que le temps de séjour dans l'appareil de séchage est de 15 à 20 minutes.

9. Procédé selon les revendications 1 à 8, caractérisé en ce que comme polymère thermoplastique, on utilise du polycarbonate, du polyester carbonate, du poly(téréphtalate d'alkylène), un polymère d'EPDM, du polystyrène ainsi que des copolymères de polystyrène ou des copolymères greffés.

10. Procédé selon la revendication 9, caractérisé en ce que le polymère thermoplastique est un polycarbonate aromatique ou un copolymère greffé d'acrylonitrile, de butadiène et de styrène (ABS).

11. Procédé selon la revendication 10, caractérisé en ce que l'on utilise un polycarbonate aromatique d'un poids moléculaire caractérisé par une viscosité en solution ηᵣₑₗ de 1,15 à 1,40, en particulier de 1,20 à 1,35.
